# EUROPÄISCHE PATENTSCHRIFT

(11) **EP 1 793 258 B1**
(45) Veröffentlichungstag und Bekanntmachung des Hinweises auf die Patenterteilung: **11.10.2017**
(21) Anmeldenummer: 06023857.3
(22) Anmeldetag: 17.11.2006
(51) Int. Cl.: G02B 21/24, G02B 21/08

(54) **Anordnung zur Fokussierung von Beleuchtungseinrichtungen für Mikroskope**
System for focussing lighting systems for microscopes
Dispositif destiné à la mise au point de dispositifs d'éclairage pour des microscopes

(30) Priorität: 01.12.2005 DE 102005058187
(43) Veröffentlichungstag der Anmeldung: 06.06.2007
(73) Patentinhaber: Carl Zeiss Microscopy GmbH, 07745 Jena (DE)
(72) Erfinder: Hermann, Andreas, 37130 Gleichen (DE); Bendlin, Cornelia, Dr., 37085 Göttingen (DE); Dietrich, Peter, Dr., 73447 Oberkochen (DE)

(56) Entgegenhaltungen:
- JP-A- 2004 302 441
- US-A1- 2004 051 979
- US-A1- 2005 259 320
- US-B1- 6 304 375
- US-B2- 6 437 912

## Beschreibung

Die Erfindung bezieht sich auf eine Anordnung zur Fokussierung von Beleuchtungseinrichtungen für Mikroskope und insbesondere für fixed stage-Mikroskope mit einem feststehenden, unbeweglichen Tisch.

Die Anordnungen zur Fokussierung umfassen vor allem Kondensorträger mit Bedienelementen in Form von Fokussier- und Justierknöpfen zur Verstellung der Kondensoren in Richtung der optischen Achse des Mikroskopstrahlenganges (Z-Richtung) und sind zur Realisierung einer Durchlichtbeleuchtung der zu beobachtenden Objekte meist im oder am unteren Teil des Mikroskopstativs, im oder am so genannten Stativfuß, angeordnet. Diese Bedienelemente sind außerdem im hinteren Bereich, also in einem von Beobachter entfernten Bereich des Stativfußes in einem ergonomisch ungünstigen Bereich angeordnet. Ein Wechseln von Kondensoren wäre somit nur mit einem erhöhten Aufwand und bei erschwerter Zugänglichkeit möglich.

Insbesondere bei fixed stage-Mikroskopen, bei denen das zu untersuchende Objekt auf einem feststehenden, unbeweglichen Tisch angeordnet ist, und der Fokussierprozess durch eine unabhängige Bewegung von Objektiv und Kondensor durchgeführt wird, treten diese Nachteile auf. Bei diesen Mikroskopen ist die Tischfläche in ihrer Größe so dimensioniert, dass dort auch Manipulatoren werden können. Der gesamte untere Bereich des Mikroskopstativs und damit auch der Stativfuß sind durch den Tisch abgedeckt und schlecht zugänglich.

In der US 5,870,222 ist ein Mikroskop beschrieben, bei welchem der Tisch fest am Stativ angeordnet ist. Unter dem Tisch befindet sich eine in Richtung der optischen Achse des Mikroskopstrahlenganges verschiebbare Kondensoranordnung, deren Bedienelemente sich an einem ergonomisch ungünstigen, vom Beobachter entfernten Ort befinden und schwer zugänglich sind.
In US 6,437,912 B2 wird eine mikroskopische Anordnung mit einem niedrigem Mikroskoptisch und einem auf dem Stativfuß aufgesetzten Kondensor beschrieben, welche beide in konventioneller Art für aufrechte Mikroskopstative vom Beobachter aus gesehen hinter der vertikalen optischen Achse befindliche Bedienelemente zur Fokussierung des Mikroskoptisches sowie auch des Kondensors aufweisen.
Diese Anordnung hat den Vorteil, dass die Hand des Bedieners auf einer Unterlage ruhen kann.
US 6,303,375 B1 beschreibt ebenfalls eine mikroskopische Anordnung, bei der ein Teil der Stativfuß-Abdeckung zur besseren Zugänglichkeit des darunter befindlichen Leuchtmittels abgenommen werden kann. Dass Leuchtmittel selbst wird mit der Abdeckung nicht entfernt.
Sowohl in US 6,437,912 B2 als auch in US 6,303,375 B1 werden Anordnungen aufgezeigt, die die Handhabung des Bedieners für definierte Arbeitsgänge verbessern.
Beiden Lösungen haftet jedoch der Nachteil an, dass eine unumgängliche Nachfokussierung des Kondensors bei wechselnden Proben und in seiner Höhe unveränderbaren Tisch nur mit besonderer Vorsicht unter hohen Schwierigkeiten möglich ist. JP 2004 302441 A offenbart eine Anordnung zur Fokussierung und Einstellung von Beleuchtungseinrichtungen an Mikroskopen wobei ein Kondensor nur seitlich aus dem Bauraum eines Stativs entnehmbar ist.

Der Erfindung liegt deshalb die Aufgabe zu Grunde, eine Anordnung zur Fokussierung und Verstellung von Beleuchtungseinrichtungen an Mikroskopen zu schaffen, bei welcher die Nachteile des Standes der Technik beseitigt sind und bei welcher eine ergonomisch günstige und gut erreichbare Anordnung der Bedienelemente gegeben ist.

Erfindungsgemäß wird diese Aufgabe bei einer gemäß dem Oberbegriff ausgebildeten Anordnung zur Fokussierung von Beleuchtungseinrichtungen an Mikroskopen mit den im kennzeichnenden Teil dieses Anspruches offenbarten Mitteln gelöst. Eine vorteilhafte Ausgestaltung wird im Unteranspruch aufgezeigt.

Um eine Bedienung und Verstellung des Kondensors zu jeder Zeit ergonomisch günstig und unbehindert zu gewährleisten sind am Kondensorträger Verstellmittel, vorteilhaft in Form von Bedienknöpfen, zur Verstellung des Kondensors in Richtung der optischen Achse des Mikroskopstrahlenganges vorgesehen, welche an einem, dem Beobachter zugewandten Bauteil des Kondensorträgers angeordnet sind.

Vorteilhaft ist es, wenn der Kondensorträger von vorn abnehmbar (entfernbar) am Stativfuß angeordnet ist. Auf diese Weise ist es leicht möglich, den Kondensor auszuwechseln oder bei entferntem Kondensor eine Beobachtung von Objekten bei Auflichtbeleuchtung vorzunehmen.

Die Erfindung soll nachstehend an einem in einer Zeichnung dargestellten Ausführungsbeispiel näher erläutert werden.

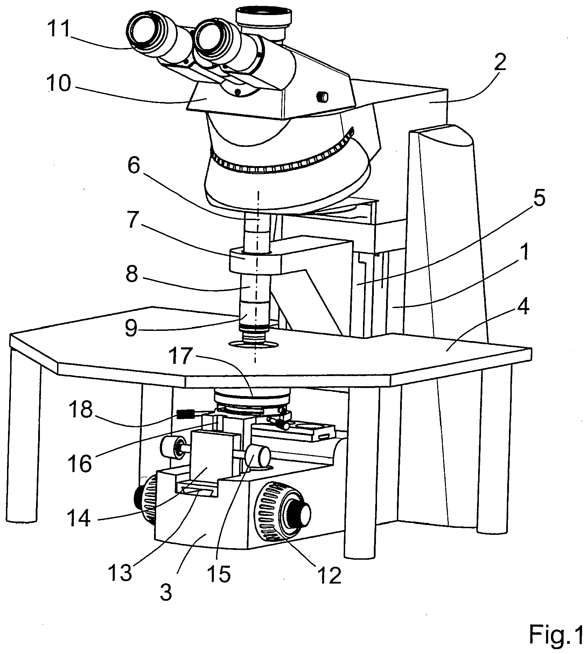

Das als Beispiel in der Fig.1 dargestellte Mikroskop umfasst ein Gehäuse oder Stativ 1 mit einem Stativkopf 2 und einem unten vorgesehenen Stativfuß 3 sowie einen feststehenden, unbeweglichen Tisch 4, auf welchem das zu beobachtende oder zu untersuchende Objekt und/oder auch Manipulatoren angeordnet sind. Am Mittelteil des Stativs 1 befindet sich ein in einer Führung 5 gelagerter, in Richtung der optischen Achse 6 des Mikroskopstrahlenganges verschiebbarer Objektivschlitten 7, an welchem eine Aufnahme 8 mit einem Mikroskopobjektiv 9 angeordnet ist. Am Stativkopf 2 ist ein Okularträger 10 mit einem oder mehreren Okularen 11 angeordnet.

Am Stativfuß 3 befinden sich Bedienelemente 12, beispielsweise in Form von Drehknöpfen, für die Fokussierung des Mikroskopobjektivs 9. Am Stativfuß 3 ist ferner ein, vorteilhaft in einer Schwalbenschwanzführung 13 geführter und vom Stativfuß 3 abnehmbarer Kondensorträger 14 vorgesehen, an welchem ein in Richtung der optischen Achse 6 (Z-Richtung) mit Hilfe von Bedienelementen 15 verschiebbarer Kondensorhalter 16 angeordnet ist, der den Kondensor 17 der Beleuchtungseinrichtung trägt. Somit ist auch gewährleistet, dass der Kondensorträger 14 zusammen mit dem Kondensorhalter 16 und dem Kondensor 17 vom Stativfuß 3 in einfacher Weise entfernt werden kann, was bei einer Beobachtung des Objektes mit Auflichtbeleuchtung notwendig ist.

Vorteilhaft ist der Kondensor 17 im Kondensorhalter 16 in zwei Koordinaten senkrecht zur optischen Achse 6 mit Hilfe von Justierschrauben 18 justierbar gelagert. Um eine ergonomisch günstige und ungehinderte Verstellung des Kondensors 17 zwecks Fokussierung und Verstellung desselben zu jeder Zeit zu gewährleisten, sind der Kondensorträger 14 und die Bedienelemente 15 für die Verstellung des Kondensorhalters 16 in Richtung der optischen Achse 6 des Mikroskopstrahlenganges an der dem Beobachter benachbarten Seite des Stativfußes 3 zwischen dem Beobachter und der optischen Achse 6 des Strahlenganges angeordnet. So wird auch eine Bedienung der Bedienelemente 15 und der Justierschrauben 18 durch den Tisch 4 nicht behindert, was bei den Anordnungen gemäß dem Stand der Technik nicht gewährleistet ist.

### Bezugszeichenzusammenstellung

- 1: Stativ
- 2: Stativkopf
- 3: Stativfuß
- 4: Tisch
- 5: Führung
- 6: optische Achse
- 7: Objektivschlitten
- 8: Aufnahme
- 9: Mikroskopobjektiv
- 10: Okularträger
- 11: Okular
- 12: Bedienelement
- 13: Schwalbenschwanzführung
- 14: Kondensorträger
- 15: Bedienelement
- 16: Kondensorhalter
- 17: Kondensor
- 18: Justierschraube

## Patentansprüche

1. Anordnung zur Fokussierung und Einstellung von Beleuchtungseinrichtungen an Mikroskopen mit einem feststehenden Tisch (4) und einem Gehäuse oder ein Stativ (1) mit einem Stativfuß (3), umfassend
- einen Kondensorträger (14), welcher am Stativfuß (3) angeordnet ist,
- einen am Kondensorträger (14) in Richtung der optischen Achse (6) des Mikroskopstrahlenganges verstellbar gelagerten Kondensorhalter (16), an welchem ein Kondensor (17) angeordnet ist,
- und Mittel am Kondensorhalter (16) zum Auswechseln und Verstellen des Kondensors (17),
**dadurch gekennzeichnet,**
- **dass** der Kondensorträger (14) im, dem Beobachter benachbarten, zugewandten Bereich des Stativfußes (3) zwischen dem Beobachter und der optischen Achse (6) des Mikroskopstrahlenganges angeordnet ist,
- **dass** am Kondensorträger (14) Verstellmittel bzw. Bedienmittel (15) zur Verstellung des Kondensors (17) in Richtung der optischen Achse (6) des Mikroskopstrahlenganges vorhanden sind, welche an einem, dem Beobachter zugewandten Bauteil des Kondensorträgers (14) angeordnet sind und
- der Kondensorträger (14) von der Seite des Beobachters aus entfernbar am Stativfuß (3) befestigt ist.

## Claims

1. System for focussing and adjusting illumination devices at microscopes with a stationary stage (4) and a housing or a stand (1) with a stand base (3), comprising:
- a condenser carrier (14), which is arranged at the stand base (3);
- a condenser holder (16), which is mounted at the condenser carrier (14) so as to be displaceable in the direction of the optical axis (6) of the microscope beam path, and at which a condenser (17) is arranged;
- and means at the condenser holder (16) for exchanging and adjusting the condenser (17),
**characterized in that**
- the condenser carrier (14) is arranged between the observer and the optical axis (6) of the microscope beam path, in the area of the stand base (3) adjacent to and directed towards the observer,
- adjusting means or control means (15) for adjusting the condenser (17) in the direction of the optical axis (6) of the microscope beam path are present at the condenser carrier (14) and are arranged at a structural part of the condenser carrier (14) directed towards the observer, and
- the condenser carrier (14) is secured at the stand base (3) so as to be removable from the observer side.

## Revendications

1. Agencement pour la mise au point et l'ajustement de dispositifs d'éclairage de microscopes comprenant une table fixe (4) et un boîtier ou un support (1) avec un pied de support (3), comprenant
- un support de condenseur (14) qui est disposé sur le pied de support (3),
- un dispositif de retenue de condenseur (16) supporté de manière déplaçable sur le support de condenseur (14) dans la direction de l'axe optique (6) du trajet du faisceau du microscope, sur lequel dispositif de retenue de condenseur est disposé un condenseur (17),
- et des moyens sur le dispositif de retenue de condenseur (16) pour remplacer et régler le condenseur (17),
**caractérisé en ce que**
- le support de condenseur (14) est disposé dans la région du pied de support (3) adjacente à et tournée vers l'observateur, entre l'observateur et l'axe optique (6) du trajet du faisceau du microscope,
- des moyens de réglage ou des moyens de commande (15) sont prévus sur le support de condenseur (14) pour régler le condenseur (17) dans la direction de l'axe optique (6) du trajet du faisceau du microscope, lesquels sont disposés sur un composant du support de condenseur (14) tourné vers l'observateur et
- le support de condenseur (14) est fixé de manière amovible sur le pied de support (3) du côté de l'observateur.
